# EUROPEAN PATENT SPECIFICATION

(11) **EP 0 960 515 B1**
(45) Date of publication and mention of the grant of the patent: **09.03.2005**
(21) Application number: 98904469.8
(22) Date of filing: 09.02.1998
(51) Int. Cl.: H04L 12/66

(54) **GATEWAY LOCATION SYSTEM SUPPORTING POTS-INTERNET GATEWAYS**
SYSTEM ZUR ORTUNG VON GATEWAYS UMSCHLIESSLICH POTS-INTERNETGATEWAYS
SYSTEME DE LOCALISATION DE PASSERELLE ACCEPTANT LES PASSERELLES ENTRE SERVICE TELEPHONIQUE DE BASE ET L'INTERNET

(30) Priority: 14.02.1997 SE 9700516
(43) Date of publication of application: 01.12.1999
(73) Proprietor: Telia AB (publ), 123 86 Farsta (SE)
(72) Inventor: ALMGREN, Gunnar, S-121 33 Enskededalen (SE)
(74) Representative: Akerman, Marten Lennart
(86) International application number: PCT/SE1998/000219
(87) International publication number: WO 1998/036543

(56) References cited:
- WO-A-96/38018
- WO-A-96/38962
- JP-A- 7 105 111
- COMPUTER SWEDEN, No. 73, (22.12.1996), page 12.

## Description

The invention relates to an Internet telecommunication system and, in particular, a gateway system for the telecommunication system, and a method for processing telephone calls over the Internet.

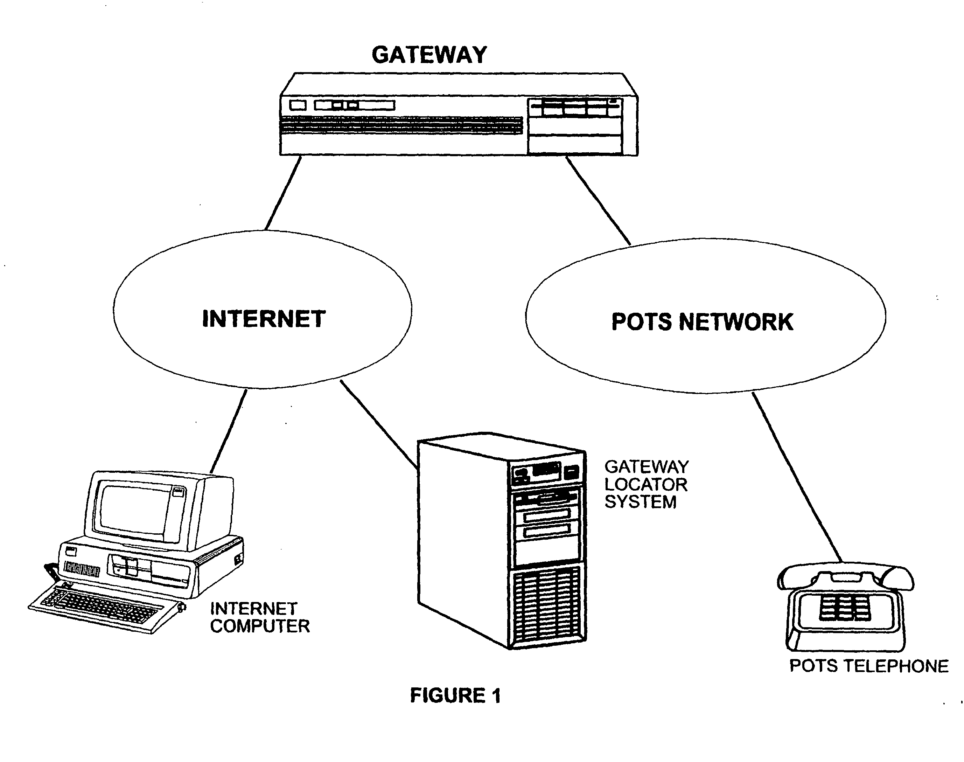

There is a need for a service provider, or a consortia of co-operating service providers, to be able to operate a set of Internet-POTS (Plain Ordinary Telephone Service) gateways at different locations in one, or several, countries. As can be seen from the Internet telecommunication system, which is diagrammatically illustrated in Figure 1 of the accompanying drawings, a Gateway is connected both to the Internet, which services a number of Internet computer users, and to a POTS Network, which services a number of POTS telephone users/subscribers, and the Gateway is adapted to bridge Internet voice protocols to POTS voice protocols, see also Computer Sweden n° 73, (22.12.1996), p. 12.

It can, in general, be assumed that Internet telephony connections are charged at a flat rate and are, in practice, independent of distance, whereas the cost of POTS telephone calls are distance dependent.

In practice, the objective of a service provider is to provide a seamless service to users/subscribers, where a call is routed through a gateway, which will minimize the distance of the POTS network traversed by the call. Ideally, the user/subscriber should not have to choose the best gateway among a potentially very large set of gateways. Thus, for calls originating on the Internet side, i.e. by a user of an Internet computer, there must be a translation function for translating a "dialed number" to a "preferred gateway". Furthermore, since the "preferred gateway" may be down (inoperative), or busy, an Internet telecommunication system should be adapted to provide a second, and possibly a third, alternative gateway for a call.

According to one aspect of the present invention, there is provided, a gateway system for an Internet telecommunication system, wherein said gateway system is adapted to connect at least one telephone network to the Internet and to thereby facilitate telephony interworking, over the Internet, and to bridge Internet voice protocols to voice protocols of said at least one telephone network, and wherein said system includes a gateway locator module adapted to locate that one of a plurality of gateways which is best suited for a particular call, characterised in that said gateway locator module is adapted to translate a dialed number for a telephone call into a prioritized list of preferred gateways for that call, and to locate that one of said set of preferred gateways that is available for the call and has a priority higher than other available gateways (herein referred to as the highest priority). The gateway locator module is adapted to support telephony interworking between geographically distinct service providers.

In a preferred arrangement, the gateway having the highest priority is used for the call and, in the event that the gateway having the highest priority is unavailable, the other gateways, of lower priority, are tried, in turn, in accordance with their priority listing, until an available gateway is located for the call.

The gateway locator module may be adapted to interact with Internet users, through the World Wide Web, and the gateway locator module may include a Domain Naming System (DNS) having, for each telephone call, a Phone Gateway (PG)-record for each one of said prioritized set of preferred gateways. Each of the PG-records comprises a priority value and domain name for a respective gateway. The priority value may be a 16-digit preference value, where lower numbers indicate a higher preference, and the domain name may identify a gateway that can serve a telephone number, or a telephone number prefix, encoded as a resolved domain name. The DNS' MX-record for mail routing is preferably used to carry the PG semantics.

A naming structure for an Internet-telephone network gateway service may include a domain name for the gateway service.

The gateway locator module preferably includes a distributed database for translating the dialed number for a telephone call into a prioritized list of preferred gateways for that call. The distributed database may be based on a Domain Naming System.

At least one of the prioritized list of preferred gateways for a call supports a VON-package used, or selected by, a calling party.

The gateway locator module preferably includes a Domain Naming System (DNS) having a VINFO record containing information on the VON-package and Nic Name to be used for voice over the Internet connections to a particular server, or host. The VINFO record is used to select a gateway for a call that supports a VON-package used, or selected by, a calling party. The VINFO record may be a string, such as, "IPHONE", or WEBPHONE", corresponding to the VON-package.

The gateway locator module preferably includes a World Wide Web (WWW) server; a Name Resolver for a Domain Name System(DNS); a Transmission Control Protocol (TCP)/Internet Protocol (IP) Interface for the WWW sever and the Name Resolver; a Gateway Locator Unit , adapted to interwork with the WWW server and the Name Resolver: and a Server System, for the DNS, adapted to interwork with the Name Resolver.

According to a second aspect of the present invention, there is provided, an Internet telecommunication system, in which telephony and related services are provided using the Internet as a transmission medium for said services, in which a gateway system is adapted to connect at least one telephone network to the Internet and to thereby facilitate telephony interworking, over the Internet, and to bridge Internet voice protocols to voice protocols of said at least one telephone network, and in which a gateway locator system is adapted to locate that one of a plurality of gateways which is best suited for a particular call, characterised in that said telecommunication system includes a gateway system as outlined in preceding paragraphs.

According to a third aspect of the present invention, there is provided, in an Internet telecommunication system in which telephony and related services are provided using the Internet as a transmission medium for said services, in which a gateway system is adapted to connect at least one telephone network to the Internet and to thereby facilitate telephony interworking, over the Internet, and to bridge Internet voice protocols to voice protocols of said at least one telephone network, and in which a gateway locator system is adapted to locate that one of a plurality of gateways which is best suited for a particular call, a method for processing telephone calls over the Internet, characterised by the steps of translating a dialed number for a telephone call into a prioritized list of preferred gateways for that call; and locating that one of said set of preferred gateways that is available for the call and has a priority higher than other available gateways (herein referred to as the highest priority).

A preferred method may be characterised by the steps of using the gateway having the highest priority for the call; and, in the event that said gateway having the highest priority is unavailable, trying the other gateways, of lower priority, in turn, in accordance with their priority listing, until an available gateway is located for the call. In the event that none of the prioritized list of prefe call is aborted.

The method may include the step of using a Domain Naming System (DNS) to provide, for each telephone call, a Phone Gateway (PG)-record for each one of said prioritized set of preferred gateways, each of said records comprising a priority value and domain name for a respective gateway. The priority value may be a 16-digit preference value, where lower numbers indicate a higher preference, and the domain name may identify a gateway that can serve a telephone number, or a telephone number prefix, encoded as a resolved domain name.

The method may include the step of using a distributed database to translate the dialed number for a telephone call into a prioritized list of preferred gateways for that call.

In accordance with a preferred method, at least one of the prioritized list of preferred gateways for a call supports a VON-package used, or selected by, a calling party.

The method may include the steps of using a Domain Naming System (DNS) to provide a VINFO record containing information on the VON-package and Nic Name to be used for voice over the Internet connections to a particular server, or host; and using said VINFO record to select a gateway for a call that supports a VON-package used, or selected by, a calling party. The VINFO record may be a string, such as, "IPHONE", or WEBPHONE", corresponding to the VON-package.

In a preferred method, the DNS' MX-record for mail routing is used to carry the PG semantics.

The method preferably uses a naming structure to provide the domain names, said naming structure including a domain name for an Internet-telephone network gateway service to be provided by a service provider.

The method preferably includes the steps of constructing a domain name for said gateway service to provide an apex for the naming structure; constructing a domain name for a dialed telephone number, including the name of the gateway service; attempting to DNS-resolve a string of elements forming the whole name for the dialed number; in the event that the resolution process fails, stripping off the least significant element of the string and attempting a new DNS-resolution; continuing with this process until the DNS-resolution succeeds, or the string is reduced to the name of the gateway service; and, in the event that the string is reduced to the gateway service name, the entire call attempt is aborted. In accordance with this method, on successful completion of the resolution process, a list of PG-records for a set of gateways is forwarded to the gateway locator system, and those gateways that do not support a VON-package used, or selected by, a user, are separated out, the separation being effected by performing, on each of the gateways identified by the PG-records, a DNS-lookup with QueryType=VINFO, i.e. a VINFO string is matched against the users preferred VON-package. The matched PG-records are then translated into HTML syntax, and the translated PG-records are transferred to the user; the translated PG-records representing a prioritized list of preferred gateways for a call.

In accordance with the foregoing method, a user, on making a telephone call, firstly attempts a connection to a gateway with the highest priority (lowest preference). In the event that the gateway having the highest priority is unavailable, the user tries to connect to the gateway with the second lowest preference value and so on until an available gateway is located for the call, i.e. the connection process is repeated by trying the other gateways, of lower priority, in turn, in accordance with their priority listing.

The method may include the steps of making provision for a telephone number to be redirected to another telephone number; assigning, to said redirected telephone number, a CNAME record, associated with the DNS name (coded number) corresponding to the redirected telephone number; and effecting a DNS resolution process on the CNAME.

The method may further include the steps of making provision, in the naming structure, for users having a PBX serving a number of telephone numbers having a common prefix, said users operating their own gateway serving all extensions below the prefix.

The method may still further include the steps of making provision, in the naming structure, for international calls, the telephone numbers of which are prefixed with a country code; and on completion of the indigenous gateway selection process for the call, restarting the DNS resolution process, in the country to which the call is directed, with a domain name assigned to the gateway service in that country, by a service provider. In accordance with a further step of this method, a list of PG-records is provided which corresponds to the gateways operated, in the said country, by the service provider.

The present invention is adapted to support the gateway system covered by our co-pending patent application number (Telia Case Reference No Kgp 217/96). It will be seen from our co-pending patent application that an Internet telecommunication system, in which telephony and related services are provided using the Internet as a transmission medium for the services, includes a gateway system which is adapted to connect at least one telephone network to the Internet and thereby to facilitate telephony interworking, over the Internet, between Internet users and users of the said at least one telephone network, and between said telephone network users. However, the nature of the design of the system is such that it can, in principle, work with any other gateway design which is adapted to interface to a Gateway Locator System (see Figure 1).

The foregoing and other features of the present invention will be better understood from the following description with reference to the accompanying drawings, in which:
Figure 1 diagrammatically illustrates an Internet communication system;
Figure 2 diagrammatically illustrates, in the form of a block diagram, a gateway locator architecture, according to the present invention; and
Figure 3 illustrates part of a naming structure, or tree, which depicts an imaginary naming hierarchy.

To facilitate an understanding of the present invention, a glossary of the abbreviations used in this patent specification are set out below:
- CGI:: Common Gateway Interface
- CNAME:: Canonical name of an alias
- DNS:: Domain Name System
- HTML:: Hypertext Markup Language
- HTTP:: Hypertext Transfer Protocol
- IP:: Internet Protocol
- IPHONE:: VON-package from Vocaltec
- MX:: Type of RR (MX RR) indicating the way an E-mail is send; name on an E-post-server
- PG:: Phone Gateway
- POTS:: Plain Ordinary Telephone Service
- RFC:: Request For Comment; The ground for the technical documetation of Internet.
- RR:: Resource Records
- TCP:: Transmission Control Protocol
- VON:: Voice-over-Internet
- VINFO:: A short name and information regarding von-packages, a new type of RR
- WEBPHONE:: VON-packages from Grace Network
- WWW:: World Wide Web

In accordance with the present invention, the gateway locator system of Figure 1 of the accompanying drawings will interact with users of the Internet, through the World Wide Web (WWW). The reasons for this are two fold, namely:
- 1.: By using the WWW, the gateway locator system will not require the use of special client software. In particular, it will be seen from the subsequent description that new types of DNS (Domain Name System) Resource Records are defined which, at least initially, will not be supported by all DNS resolvers. The design of the WWW is such that all DNS intricacies are hidden from the user.
- 2.: The web-server of the gateway locator system provides an entry point and uniform interface to a particular service provider's gateway offering.

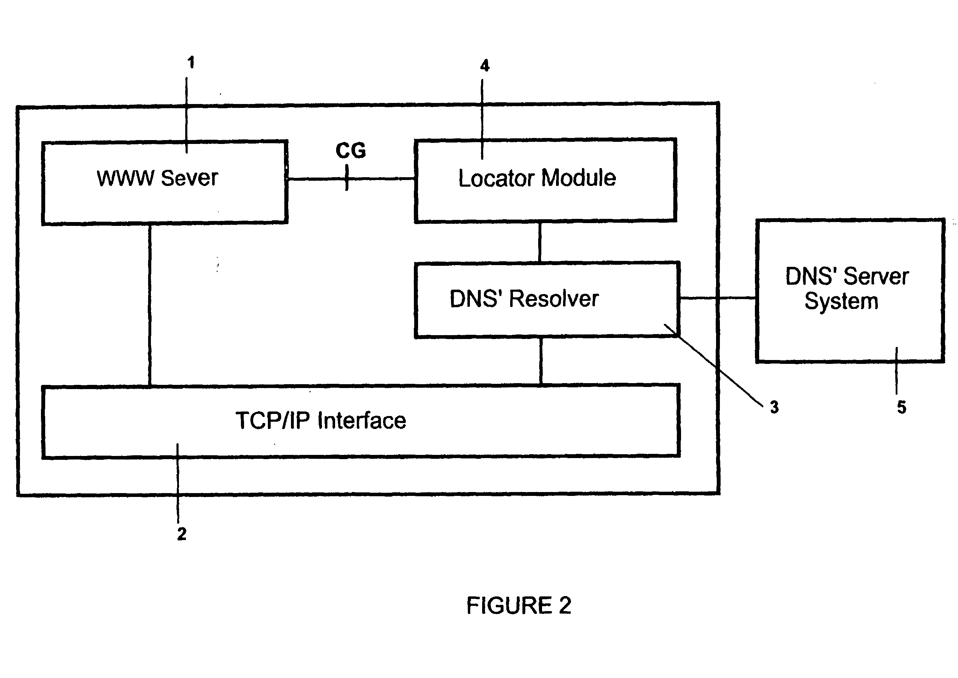

An architecture for a gateway locator system of the present invention, which is diagrammatically illustrated, in the form of a block diagram, in Figure 2 of the accompany drawings, includes a WWW Server 1, a Transmission Control Protocol (TCP)/Internet Protocol (IP) Interface 2 that interworks with the WWW Server 1 and a Resolver 3 for the Domain Name System(DNS). The WWW Server 1 interfaces with a Locator Module 4 by means of a Common Gateway Interface (CGI), and Locator Module 4 is adapted to interwork with the DNS' Resolver 3. The DNS' Resolver 3 also interworks with a Server System 5 for the DNS.

The core of the gateway locator system of Figure 2 is a distributed database (not shown) which is adapted to provide a translation function for translating a telephone number into a "preferred gateway", or more particularly, a prioritized list of gateways for that particular number, i.e. if the "preferred gateway" is not available, then the next gateway in the prioritized list will be used.

Furthermore, the core of the distributed database is based on a Domain Name System [see RFC 1034, 1035]. With such a system, a telephone number is encoded in the form of Domain Names. A brief description of the Domain Name System (DNS), which is, in fact, an excerpt from RFC 1034, is given below.

In accordance with RFC 1034, the interface to the users of the gateway location service is through the World Wide Web (HTML/HTTP). Thus, when connecting to a gateway locator system (see Figure 1), a user will see a web-page having a form where the user may:
- enter the telephone number he/she wants to dial;
- select the Voice-over-Network (VON)-package he/she is using; and
- possibly also select some additional information on charging methods etc..

When the user clicks the "Submit" button, this information is transferred to a server and a new page will be presented to the user. This new page contains an ordered set of links (clickable buttons) to the gateways which are able to service the telephone number and the particular VON-package selected by the user. The telephone number is presented again so that the user will be aware if a redirect was encountered.

The Domain Name System (DNS) has three major components, namely, the Domain Name Space and Resource Records, Name Servers, and Name Resolvers.

The Domain Name Space and Resource Records are specifications for a tree structured namespace and data associated with the names. Conceptually, each node and leaf of the domain name space tree names a set of information, and "query" operations are attempts to extract specific types of information from a particular set. A "query" names the domain name of interest and describes the type of resource information that is desired. For example, the Internet uses some of its domain names to identify hosts; queries for address resources return Internet host addresses.

Name Servers are server programs which hold information concerning the domain tree's structure and information sets. A Name Server may have cache structure, or set information, about any part of the domain tree but, in general, a particular Name Server has complete information about a subset of the domain space, and pointers to other Name Servers that can be used to lead to information from any part of the domain tree. Name Servers know the parts of the domain tree for which they have complete information; a Name Server is said to be an AUTHORITY for these parts of the name space. Authoritative information is organized into units called ZONES, and these zones can be automatically distributed to the Name Servers which provide redundant service for the data in a zone.

Name Resolvers are programs that extract information from Name Servers in response to client requests. Resolvers must be able to access at least one Name Server and use that Name Server's information to answer a query directly, or pursue the query using referrals to other Name Servers.

A Resolver will typically be a system routine that is directly accessible to user programs. No protocol is, therefore, necessary between the Resolver and the user program.

As for a DNS extension supporting Internet-POTS Gateways, two new Resource Records (RR) will be defined to support the gateway locator service of the present invention, namely, the Phone Gateway (PG)-record and the VINFO record.

The PG-record is a pair (i.e. "priority" and "domain-name") where the "domain-name" identifies a gateway that can serve the POTS number (or prefix), encoded in the resolved domain name, and "priority" is a 16-digit preference value where lower numbers mean higher preference.

For example, consider the following PG-records returned by a DNS-query:
[1,phone-gw.sthlm.telia.se]
[2,phone-gw.uppsala.telia.se]
[3,phone-gw.telia.se]

The interpretation to be given to these PG-records is that the gateway having a domain name "phone-gw.sthlm.telia.se" is priority "1" and is, therefore, best suited for the telephone call. If that gateway is down, or busy, then priority "2", namely, the gateway having a domain name "phone-gw.uppsala.telia.se" should be tried. If that also fails, then the gateway having priority "3" and domain name "phone-gw.telia.se" will have to be attempted, as a last resort.

It should be noted that the syntax of a PG-record is identical to that of an MX record. However, since Mail Routing will not be relevant to the domains used to support telephone gateways, the MX record may be used to carry the PG semantics. Thus, no changes will be required to DNS Servers and Resolvers.

As for the VINFO record, this record contains information on the VON-package and Nic-Name to be used when connecting 'voice-over the Internet to a particular server, or host. The VINFO record is used to select a gateway that supports the VON-package, preferred by the user. This record is also useful for a gateway servicing POTS-originated calls which are destined for Internet users (i.e. users of computers connected to the Internet), because the gateway can determine which VON-package should be used for connection to the user's computer.

The VINFO record is a string corresponding to a VON-package, for example, ""IPHONE", or "WEBPHONE".

As for the naming structure, the service provider must establish one top domain corresponding to its POTS-Internet gateway service. This does not necessarily introduce a bottle neck, or single point of failure, because this domain can be widely replicated. Given the service provider's top-domain and the full length dialed number, a domain name can be constructed by a simple algorithm. This is best illustrated by the following example for telephone number" + 46 8 707 5560" and a top-domain of "phonedir.telia.se":
+ 46 8 707 5560 --> p0.p6.p5.p5.p7.p0.p7.p8.p6.p4.phonedir.telia.se

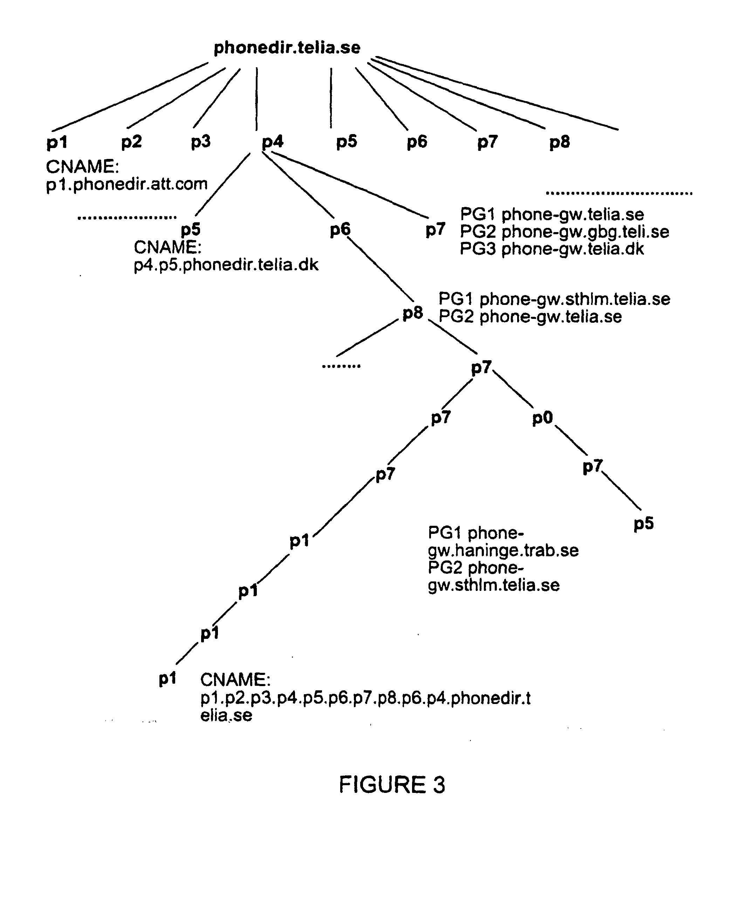

This is really a "purported name" because there may, or may not, be a registered domain name corresponding to this string. However, some trailing substring of the name is likely to correspond to a node in the domain hierarchy. In the imaginary naming hierarchy, depicted in Figure 3 of the accompanying drawings, in which only part of the tree is shown, the top domain name is "phonedir.telia.se", which forms an apex for the naming structure, and there is an entry corresponding to the substring "p5.p7.p0.p7.p8.p6.p4.phonedir.telia.se".

A first step of the resolution process will be for the resolving algorithm to attempt to DNS-resolve the whole name. If that fails, the least significant element will be stripped off, i.e. p7, in this case, and a new DNS-resolution will be attempted with the string "p6.p5.p4.p3.p2.p1.p8.p6.p4.phonedir.telia.se". If this fails, "p6" will be stripped of etc.. This process continues until the DNS-resolution succeeds, or the string is reduced to the service providers top domain, i.e. "phonedir.telia.se", in this case. If this occurs, then the entire call attempt has failed. In order to avoid unnecessary misses, a service provider may register a set of PG-records with each full length telephone number. The design is, however, robust for situations where all numbers are not registered, but name resolution performance may suffer.

If the resolution process is successful, a list of PG-records will be returned to the DNS resolver software. Thus, when the Locator Module 4 (see Figure 2) has received a list of PG-records from the DNS' Resolver 3, it is adapted to sort out those that do not support the VON-package selected by the user. This can be effected by performing a DNS-lookup with QueryType=VINFO, on each of the gateways identified by the PG-records. The VINFO string can then me matched against the users preferred VON-package. The matched PG-records are then translated into HTML syntax, by the Locator Module 4, and transferred to the user, through the WWW-Server 1. The user/client will then try to connect to the server with highest priority (lowest preference). If that server is busy, or unavailable, the user/client will try to connect to the server with the second lowest preference value etc..

The present invention also supports redirection of telephone numbers. If a particular telephone number is redirected, there will be a CNAME record, associated with the DNS name (coded number), corresponding to that telephone number. The CNAME points to the DNS name which represents the telephone number that the access shall be redirected to.

Consider, for example, a search for the telephone number +46 8 777 1111. The DNS resolver will, as illustrated in Figure 3 of the drawing, return the CNAME=p1.p2.p3.p4.p5.p6.p7.p8.p6.p4.phonedir.telia.se. The Locator Module 4, then tells the DNS' Resolver 3 to resolve this name instead.

The naming structure is flexible enough to let the service provider smoothly cooperate with partners and customers. In the example naming structure of Figure 3 of the accompanying drawings, the service provider has a customer with a PBX serving a number of telephone numbers having a common prefix, such as, "+46 8 707 5***". This customer operates his own gateway serving all extensions below this prefix. Thus, a request for telephone number "+ 46 8 707 5560" will result in the gateway having the domain name "phone-gw.haninge.trab.se", i.e. PG-record 1 of Figure 3 for the telephone number, being presented as the first choice. If this gateway is busy, or down, then the gateway "phone-gw.sthlm.telia.se" will be tried. If this also fails, then the final (last) choice will be the gateway "phone-gw.telia.se". If all three gateways are busy, or down, then the attempt to establish a telephone call connection will have failed.

Thus, in accordance with the present invention, a gateway system for an Internet telecommunication system is adapted to:
- connect at least one telephone network to the Internet and to thereby facilitate telephony interworking, over the Internet,
- bridge Internet voice protocols to voice protocols of said at least one telephone network, and
- includes a gateway locator module adapted to:
   - translate a dialed number for a telephone call into a prioritized list of preferred gateways for that call; and
   - locate that one of said set of preferred gateways that is available for the call and has a priority higher than other available gateways.

The gateway Locator Module 4 of Figure 2 is also adapted to support partnerships between geographic distinct service providers, in that, provision is made in the name structure for international calls, i.e. the telephone numbers of which are prefixed with a country code. Thus, for telephone calls directed overseas, for example, to North America, i.e. starting with a "+1" prefix, the method of the present invention will, on completion of the indigenous gateway selection process for the call, restart the DNS resolution process, in North America, (i.e. the country to which the call is directed), with the top-domain name assigned to the gateway service, in North America, by a service provider, such as AT&T. This process will most likely result in a list of PG-records corresponding to the gateways operated by the North American service provider, such as AT&T.

## Claims

1. A gateway system for an Internet telecommunication system, wherein said gateway system is adapted to connect at least one telephone network to the Internet and to thereby facilitate telephony interworking, over the Internet, and to bridge Internet voice protocols to voice protocols of said at least one telephone network, and wherein said system includes a gateway locator module adapted to locate that one of a plurality of gateways which is best suited for a particular call, **characterised in that** said gateway locator module is adapted to translate a dialed number for a telephone call into a prioritized list of preferred gateways for that call, where the distance in the POTS network traversed by the call is basis for the prioritization, and to locate that one of said set of preferred gateways that is available for the call and has a priority higher than other available gateways; herein referred to as the highest priority.

2. A gateway system, as claimed in claim 1, **characterised in that** the gateway having the highest priority is used for the call, and **in that**, in the event that said gateway having the highest priority is unavailable, the other gateways, of lower priority, are tried, in turn, in accordance with their priority listing, until an available gateway is located for the call.

3. A gateway system, as claimed in any preceding claim, **characterised in that** said gateway locator module is adapted to interact with Internet users, through the World Wide Web, **in that** said gateway locator module includes a Domain Naming System (DNS) having, for each telephone call, a Phone Gateway (PG)-record for each one of said prioritized set of preferred gateways, each of said records comprising a priority value and domain name for a respective gateway.

4. A gateway system, as claimed in claim 3, **characterised in that** a naming structure for an Internet-telephone network gateway service includes a domain name for the gateway service.

5. A gateway system, as claimed in claim 3, or claim 4, **characterised in that** said priority value is a 16-digit preference value, where lower numbers indicate a higher preference.

6. A gateway system, as claimed in any of claims 3 to 5, **characterised in that** said domain name identifies a gateway that can serve a telephone number, or a telephone number prefix, encoded as a resolved domain name.

7. A gateway system, as claimed in any preceding claim, **characterised in that** said gateway locator module includes a distributed database for translating the said dialed number for a telephone call into a prioritized list of preferred gateways for that call.

8. A gateway system, as claimed in claim 7, when appended to any of claim 4 to 7, **characterised in that** said distributed database is based on a Domain Naming System.

9. A gateway system, as claimed in any preceding claim, **characterised in that** at least one of the prioritized list of preferred gateways for a call supports a VON-package used, or selected by, a calling party.

10. A gateway system, as claimed in claim 9, **characterised in that** said gateway locator module includes a Domain Naming System (DNS) having a VINFO record containing information on the VON-package and Nic Name to be used for voice over the Internet connections to a particular server, or host, said VINFO record being used to select a gateway for a call that supports a VON-package used, or selected by, a calling party.

11. A gateway system, as claimed in claim 10, **characterised in that** said VINFO record is a string, such as, "IPHONE", or WEBPHONE", corresponding to the VON-package.

12. A gateway system, as claimed in any of claims 3 to 11, **characterised in that** the DNS' MX-record for mail routing is used to carry the PG semantics.

13. A gateway system, as claimed in any preceding claim, **characterised in that** said gateway locator module is adapted to support telephony interworking between geographically distinct service providers.

14. A gateway system, as claimed in any preceding claims, **characterised in that** said gateway locator module includes;
- a World Wide Web (WWW) server;
- a Name Resolver for a Domain Name System(DNS);
- a Transmission Control Protocol (TCP)/Internet Protocol (IP) Interface for the WWW sever and the Name Resolver;
- a Gateway Locator Unit , adapted to interwork with the WWW server and the Name Resolver: and
- a Server System, for the DNS, adapted to interwork with the Name Resolver.

15. A telecommunication system in which telephony and related services are provided using the Internet as a transmission medium for said services, in which a gateway system is adapted to connect at least one telephone network to the Internet and to thereby facilitate telephony interworking, over the Internet, and to bridge Internet voice protocols to voice protocols of said at least one telephone network, and in which a gateway locator system is adapted to locate that one of a plurality of gateways which is best suited for a particular call, said telecommunication system including a gateway system as claimed in any of claims 1 to 14.

16. A method for processing a telephone cells over the Internet in a telecommunication system in which telephony and related services are provided using the Internet as a transmission medium for said services, in which a gateway system is adapted to connect at least one telephone network to the Internet and to thereby facilitate telephony interworking, over the Internet, and to bridge Internet voice protocols to voice protocols of said at least one telephone network, and in which a gateway locator system is adapted to locate that one of a plurality of gateways which is best suited for a particular call, the method being **characterised by** the steps of:
- translating a dialed number for a telephone call into a prioritized list of preferred gateways for that call, where the distance in the POTS network traversed by the call is basis for the prioritization; and
- locating that one of said set of preferred gateways that is available for the call and has a priority higher than other available gateways (herein referred to as the highest priority).

17. A method as claimed in claim 16, **characterised by** the steps of:
- using the gateway having the highest priority for the call; and
- in the event that said gateway having the highest priority is unavailable, trying the other gateways, of lower priority, in turn, in accordance with their priority listing, until an available gateway is located for the call.

18. A method as claimed in claim 16, or claim 17, **characterised by** the step of aborting the call, in the event that none of the prioritized list of preferred gateways are available.

19. A method as claimed in any of claims 16 to 18, **characterised by** the step of using a Domain Naming System (DNS) to provide, for each telephone call, a Phone Gateway (PG)-record for each one of said prioritized set of preferred gateways, each of said records comprising a priority value and domain name for a respective gateway.

20. A method as claimed in claim 19, **characterised in that** said priority value is a 16-digit preference value, where lower numbers indicate a higher preference.

21. A method as claimed in claim 19, or claim 20, **characterised in that** said domain name identifies a gateway that can serve a telephone number, or a telephone number prefix, encoded as a resolved domain name.

22. A method as claimed in any of claims 16 to 21, **characterised by** the step of using a distributed database to translate the dialed number for a telephone call into a prioritized list of preferred gateways for that call.

23. A method as claimed in any of claims 16 to 22, **characterised in that** at least one of the prioritized list of preferred gateways for a call supports a VON-package used, or selected by, a calling party.

24. A method as claimed in claims 23, **characterised by** the steps of:
- using a Domain Naming System (DNS) to provide a VINFO record containing information on the VON-package and Nic Name to be used for voice over the Internet connections to a particular server, or host; and
- using said VINFO record to select a gateway for a call that supports a VON-package used, or selected by, a calling party.

25. A method as claimed in claim 24, **characterised in that** said VINFO record is a string, such as, "IPHONE", or WEBPHONE", corresponding to the VON-package.

26. A method as claimed in any of claims 19 to 25, **characterised by** using the DNS' MX-record for mail routing to carry the PG semantics.

27. A method as claimed in any of claims 19 to 26, **characterised by** the step of using a naming structure to provide said domain names, said naming structure including a domain name for an Internet-telephone network gateway service to be provided by a service provider.

28. A method as claimed in claim 27, **characterised by** the steps of:
- constructing a domain name for said gateway service to provide an apex for the naming structure;
constructing a domain name for a dialed telephone number, including the name of the gateway service;
- attempting to DNS-resolve a string of elements forming the whole name for the dialed number;
- in the event that the resolution process fails, stripping off the least significant element of the string and attempting a new DNS-resolution;
- continuing with this process until the DNS-resolution succeeds, or the string is reduced to the name of the gateway service; and
- in the event that the string is reduced to the gateway service name, the entire call attempt is aborted.

29. A method as claimed in claim 28, **characterised by** the steps of:
- on successful completion of the resolution process, forwarding a list of PG-records for a set of gateways to the gateway locator system; and
- separating out those gateways that do not support a VON-package used, or selected by, a user.

30. A method as claimed in claim 29, **characterised by** the steps of:
- separating out those gateways that do not support the VON-package used, or selected by, a user by performing, on each of the gateways identified by the PG-records, a DNS-lookup with QueryType=VINFO, a VINFO string being matched against the users preferred VON-package;
- translating the matched PG-records into HTML syntax; and
- transferring the translated PG-records to the user, said translated PG-records representing a prioritized list of preferred gateways for a call.

31. A method as claimed in claim 30, **characterized by** the steps of:
- said user, on making a telephone call, attempting a connection to a gateway with the highest priority (lowest preference);
- in the event that the gateway having the highest priority is unavailable, trying to connect to the gateway with the second lowest preference value; and
- repeating this process, trying the other gateways, of lower priority, in turn, in accordance with their priority listing, until an available gateway is located for the call.

32. A method as claimed in any of claims 16 to 31, **characterised by** the steps of:
- making provision for a telephone number to be redirected to another telephone number;
- assigning, to said redirected telephone number, a CNAME record, associated with the DNS name (coded number) corresponding to the redirected telephone number; and
- effecting a DNS resolution process on the CNAME.

33. A method as claimed in any of claims 26 to 32, **characterised by** the steps of making provision, in the naming structure, for users having a PBX serving a number of telephone numbers having a common prefix, said users operating their own gateway serving all extensions below the prefix.

34. A method as claimed in any of claims 26 to 32, **characterised by** the steps of:
- making provision, in the naming structure, for international calls, the telephone numbers of which are prefixed with a country code; and
- on completion of the indigenous gateway selection process for the call, restarting the DNS resolution process, in the country to which the call is directed, with a domain name assigned to the gateway service in that country, by a service provider.

35. A method as claimed in claim 34, **characterised by** the step of providing a list of PG-records corresponding to gateways operated, in the said country, by the service provider.

## Patentansprüche

1. Gateway-System für ein Internet-Telekommunikationssystem, bei dem das Gateway-System so ausgebildet ist, dass es wenigstens ein Telefonnetz an das Internet anschließen und dabei die Telefonzusammenarbeit über das Internet zu erleichtern und die Internet-Sprechprotokolle mit den Sprechprotokollen des wenigstens einen Telefonnetzes überbrücken kann, und wobei das System aufweist ein Gateway-Lokalisatormodul, das so ausgebildet ist, dass es ein Gateway einer Anzahl von Gateways lokalisieren kann, das für einen bestimmten Anruf am Besten geeignet ist,
**dadurch gekennzeichnet, dass** das Gateway-Lokalisatormodul so ausgebildet ist, dass es eine gewählte Nummer für einen Telefonanruf in eine Prioritätsliste von bevorzugten Gateways für diesen Anruf übersetzen kann, wobei der Abstand in dem POTS-(Plain Ordinary Telephone Service)-Netz der von dem Anruf durchlaufen wird, die Basis für die Prioritätsverleihung ist, und dass es den einen Satz der bevorzugten Gateways, die für diesen Anruf zur Verfügung stehen und der eine höhere Priorität als die anderen zur Verfügung stehenden Gateways hat, lokalisieren kann; die hierbei als höchste Priorität bezeichnet wird.

2. Gateway-System nach Anspruch 1, **dadurch gekennzeichnet, dass** das Gateway mit der höchsten Priorität für den Anruf verwendet wird, und dass im Fall, dass dieses Gateway mit der höchsten Priorität nicht zur Verfügung steht, die anderen Gateways mit niedriger Priorität der Reihe nach in Übereinstimmung mit ihrer Prioritätslistenstellung versucht werden, bis ein für den Anruf zur Verfügung stehendes Gateway lokalisiert ist.

3. Gateway-System nach einem der vorstehenden Ansprüche,
**dadurch gekennzeichnet, dass** das Gateway-Lokalisatormodul so ausgebildet ist, dass es mit Internet-Nutzern über das World Wide Web interagieren kann, indem das Gateway-Lokalisatormodul aufweist ein Domain-Naming-System (DNS), das für jeden Telefonanruf eine Telefon-Gateway-(PG)-Aufzeichnung für jeden einen der Prioritätssätze der bevorzugten Gateways hat, wobei jede Aufzeichnung einen Prioritätswert und einen Domain-Namen für ein entsprechendes Gateway hat.

4. Gateway-System nach Anspruch 3, **dadurch gekennzeichnet, dass** die Namensgebungsstruktur für einen Internet-Telefonnetz-Gateway-Service für den Gateway-Service einen Domain-Namen hat.

5. Gateway-System nach Anspruch 3 oder 4,
**dadurch gekennzeichnet, dass** der Prioritätswert ein 16-stelliger Präferenzwert ist, wobei die niedrigeren Zahlen eine höhere Präferenz anzeigen.

6. Gateway-System nach einem der Ansprüche 3 bis 5,
**dadurch gekennzeichnet, dass** der Domain-Name ein Gateway identifiziert, das als eine Telefonnummer, oder eine Telefonnummernvorwahl, die als ein zerlegter Domain-Name codiert ist, dienen kann.

7. Gateway-System nach einem der vorstehenden Ansprüche,
**dadurch gekennzeichnet, dass** das Gateway-Lokalisatormodul eine dezentrale Datenbasis aufweist, um die gewählte Nummer für einen Telefonanruf in eine Prioritätsliste für diesen Anruf bevorzugter Gateways zu übersetzen.

8. Gateway-System nach Anspruch 7, wenn bezogen auf einen der Ansprüche 4 bis 7,
**dadurch gekennzeichnet, dass** die dezentrale Datenbasis auf einem Domain-Naming-System basiert.

9. Gateway-System nach einem der vorstehenden Ansprüche,
**dadurch gekennzeichnet, dass** wenigstens eines der Prioritätsliste bevorzugter Gateways für einen Anruf eine verwendete VON-Packung unterstützt, oder durch einen anrufenden Teilnehmer gewählt worden ist.

10. Gateway-System nach Anspruch 9, **dadurch gekennzeichnet, dass** das Gateway-Lokalisatormodul aufweist ein Domain-Naming-System (DNS), das eine, eine VINFO-Aufzeichnung enthaltende Information über die VON-Packung und den Spitznamen, der für die Sprache über die Internet-Verbindungen mit einem bestimmten Server oder Zentralrechner verwendet wird, enthält, wobei die VINFO-Aufzeichnung dazu verwendet wird, ein Gateway für den Anruf zu wählen, das eine verwendete VON-Packung unterstützt, oder das durch einen anrufenden Teilnehmer gewählt worden ist.

11. Gateway-System nach Anspruch 10, **dadurch gekennzeichnet, dass** die VINFO-Aufzeichnung eine der VON-Packung entsprechende Zeichenkette, wie beispielsweise "IPHONE" oder "WEBPHONE" ist.

12. Gateway-System nach einem der Ansprüche 3 bis 11,
**dadurch gekennzeichnet, dass** für die Durchführung der PG-Semantiken die DNS'MX-Aufzeichnung für Mail-Routing verwendet wird.

13. Gateway-System nach einem der vorstehenden Ansprüche,
**dadurch gekennzeichnet, dass** das Gateway-Lokalisatormodul so ausgebildet ist, dass es die Telefonzusammenarbeit zwischen geografisch getrennten Service-Providern unterstützen kann.

14. Gateway-System nach einem der vorstehenden Ansprüche,
**dadurch gekennzeichnet, dass** das Gateway-Lokalisatormodul aufweist
- einen World Wide Web-(WWW)-Server;
- einen Namensauflöser für ein Domain-Namenssystem (DNS);
- eine Übertragungssteuerprotokoll-(TCP)/Internet-Protokoll-(IP)-Schnittstelle für den WWW-Server und den Namensauflöser;
- eine Gateway-Lokalisatoreinheit, die so ausgebildet ist, dass sie mit dem WWW-Server und dem Namensauflöser zusammenarbeiten kann; und
- ein Server-System für das DNS, das so ausgebildet ist, dass es mit dem Namensauflöser zusammenarbeiten kann.

15. Telekommunikationssystem, bei dem Telefonieren und zugehörige Dienste unter Verwendung des Internet als Übertragungsmedium für diese Dienste verwendet werden, wobei ein Gateway-System so ausgebildet ist, dass es wenigstens ein Telefonnetz mit dem Internet verbinden kann und um dadurch die Telefonzusammenarbeit über das Internet zu erleichtern und die Internet-Sprechprotokolle mit den Sprechprotokollen des wenigstens einen Telefonnetzes zu überbrücken, und bei dem ein Gateway-Lokalisatorsystem so ausgebildet ist, dass es eines einer Anzahl von Gateways lokalisieren kann, das für den besonderen Anruf am Besten geeignet ist, wobei das Telekommunikationssystem ein Gateway-System nach einem der Ansprüche 1 bis 14 enthält.

16. Verfahren zur Verarbeitung von Telefonanrufen über das Internet in einem Telekommunikationssystem, in welchem Telefonieren und zugehörige Dienste unter Verwendung des Internet als Übertragungsmedium für die Dienste vorgesehen sind, wobei ein Gateway-System so ausgebildet ist, dass es wenigstens ein Telefonnetz an das Internet anschließen kann und dadurch die Telefonzusammenarbeit über das Internet erleichtern kann und die Internet-Sprechprotokolle mit den Sprechprotokollen des wenigstens einen Telefonnetzes überbrücken kann, und bei dem ein Gateway-Lokalisatorsystem so ausgebildet ist, dass es eines der Anzahl von Gateways lokalisieren kann, das für einen bestimmten Anruf am Besten geeignet ist, wobei das Verfahren durch die Schritte gekennzeichnet ist:
- Übersetzen einer gewählten Nummer für einen Telefonanruf in eine Prioritätsliste der bevorzugten Gateways für diesen Anruf, wobei der Abstand in dem POTS-Netz, welcher von dem Anruf durchschritten wird, die Basis für die Prioritätssetzung ist; und
- Lokalisieren des einen der Sätze der bevorzugten Gateways, der für den Anruf zur Verfügung steht und eine höhere Priorität als andere zur Verfügung stehende Gateways hat (hierbei als die höchste Priorität bezeichnet).

17. Verfahren nach Anspruch 16, **gekennzeichnet durch** die Schritte:
- Verwenden des Gateways mit der höchsten Priorität für den Anruf; und
- für den Fall, dass das Gateway mit der höchsten Priorität nicht zur Verfügung steht, versuchen von anderen Gateways mit niedriger Priorität der Reihe nach in Übereinstimmung mit ihrer Prioritätslistenstellung, bis ein zur Verfügung stehendes Gateway für den Anruf lokalisiert ist.

18. Verfahren nach Anspruch 16 oder 17, **gekennzeichnet durch** den Schritt Abbrechen des Anrufes für den Fall, dass keines der bevorzugten Gateways der Prioritätsliste zur Verfügung steht.

19. Verfahren nach einem der Ansprüche 16 bis 18, **gekennzeichnet durch** den Schritt Verwenden eines Domain-Naming-Systems (DNS), um für jeden Telefonanruf eine Telefon-Gateway-(PG)-Aufzeichnung für jeden einen der Prioritätssätze der bevorzugten Gateways zu erzeugen, wobei jede der Aufzeichnungen einen Prioritätswert und einen Domain-Namen für ein entsprechendes Gateway aufweist.

20. Verfahren nach Anspruch 19, **dadurch gekennzeichnet, dass** der Prioritätswert ein 16-stelliger Präferenzwert ist, wobei die niedrigeren Zahlen eine höhere Präferenz anzeigen.

21. Verfahren nach Anspruch 19 oder 20, **dadurch gekennzeichnet, dass** der Domain-Name ein Gateway identifiziert, das eine Telefonnummer bedienen kann, oder eine Telefonnummernvorwahl identifiziert, die als ein aufgelöster Domain-Name codiert ist.

22. Verfahren nach einem der Ansprüche 16 bis 21, **gekennzeichnet durch** den Schritt Verwenden einer dezentralen Datenbasis zum Übersetzen der gewählten Nummer für einen Telefonanruf in eine Prioritätsliste bevorzugter Gateways für diesen Anruf.

23. Verfahren nach einem der Ansprüche 16 bis 22,
**dadurch gekennzeichnet, dass** wenigstens eines der bevorzugten Gateways für einen Anruf der Prioritätsliste eine durch einen anrufenden Teilnehmer verwendete oder gewählte VON-Packung unterstützt.

24. Verfahren nach Anspruch 23, **gekennzeichnet durch** die Schritte:
- Verwenden eines Domain-Naming-Systems (DNS) zum Erzeugen einer VINFO-Aufzeichnung, die Information der VON-Packung und des Spitznamens enthält, der für die Sprache über die Internet-Verbindungen zu einem bestimmten Server, oder Hauptrechner verwendet wird; und
- Verwenden der VINFO-Aufzeichnung zum Wählen eines Gateways für einen Anruf, das eine verwendete VON-Packung unterstützt oder **durch** einen anrufenden Teilnehmer gewählt worden ist.

25. Verfahren nach Anspruch 24, **dadurch gekennzeichnet, dass** die VINFO-Aufzeichnung entsprechend der VON-Packung eine Zeichenkette ist, wie beispielsweise "IPHONE" oder "WEBPHONE".

26. Verfahren nach einem der Ansprüche 19 bis 25, **gekennzeichnet durch** die Verwendung der DNS'MX-Aufzeichnung für die Mail-Routing zur Durchführung der PG-Semantiken.

27. Verfahren nach einem der Ansprüche 19 bis 26, **gekennzeichnet durch** den Schritt Verwenden einer Benennungsstruktur zum Erzeugen der Domain-Namen, wobei die Benennungsstruktur einen Domain-Namen für einen Internet-Telefonnetz-Gateway-Service enthält, der **durch** einen Service-Provider vorgesehen ist.

28. Verfahren nach Anspruch 27, **gekennzeichnet durch** die Schritte:
- Bilden eines Domain-Namens für diesen Gateway-Service zum Erzeugen eines Scheitelpunktes für die Benennungsstruktur;
- Bilden eines Domain-Namens für eine gewählte Telefonnummer, die den Namen des Gateway-Service enthält;
- Versuchen der DNS-Lösung einer Zeichenkette von Elementen zum Bilden des ganzen Namens für die gewählte Nummer;
- für den Fall, dass der Auflösungsvorgang fehlgeht, Entfernen des geringstwertigen Elementes der Zeichenkette und Versuchen einer neuen DNS-Lösung;
- Fortsetzen dieses Vorganges, bis die DNS-Lösung erfolgreich ist oder die Zeichenkette auf den Namen des Gateway-Service reduziert ist; und
- für den Fall, dass die Zeichenkette auf den Namen des Gateway-Service reduziert ist, Abbrechen des gesamten Anrufversuches.

29. Verfahren nach Anspruch 28, **gekennzeichnet durch** die Schritte:
- bei erfolgreicher Beendigung des Lösungsvorganges Liefern einer Liste von PG-Aufzeichnungen für einen Satz Gateways an das Gateway-Lokalisatorsystem; und
- Separieren aus diesen Gateways dasjenige, welches nicht eine verwendete VON-Packung unterstützt oder **durch** einen Nutzer gewählt worden ist.

30. Verfahren nach Anspruch 29, **gekennzeichnet durch** die Schritte:
- Separieren aus diesen Gateways dasjenige, welches nicht die verwendete VON-Packung unterstützt oder **durch** einen Nutzer gewählt worden ist, indem an jedem Gateway, das **durch** die PG-Aufzeichnung identifiziert worden ist, ein DNS-Nachschlagen mit Query-Type=VINFO durchgeführt wird, eine VINFO-Zeichenkette gegenüber der vom Nutzer bevorzugten VON-Packung angepasst wird;
- Übersetzen der angepassten PG-Aufzeichnungen in die HTML-Syntax; und
- Übertragen der übersetzten PG-Aufzeichnungen zum Nutzer, wobei die übersetzten PG-Aufzeichnungen eine Prioritätsliste der bevorzugten Gatways für den Anruf repräsentieren.

31. Verfahren nach Anspruch 30, **gekennzeichnet durch** die Schritte:
- Versuchen der Erstellung einer Verbindung mit einem Gateway mit der höchsten Priorität (niedrigsten Präferenz) **durch** den Nutzer bei der Durchführung eines Telefonanrufes;
- für den Fall, dass das Gateway mit der höchsten Priorität nicht zur Verfügung steht, Versuchen einer Verbindung mit dem Gateway mit dem zweitniedrigsten Präferenzwert; und
- Wiederholen dieses Vorgangs, Versuchen von anderen Gateways mit niedrigerer Priorität der Reihe nach in Übereinstimmung mit ihrer Prioritätsliste, bis ein zur Verfügung stehendes Gateway für den Anruf lokalisiert ist.

32. Verfahren nach einem der Ansprüche 16 bis 31, **gekennzeichnet durch** die Schritte:
- Durchführen einer Anordnung für eine Telefonnummer, dass diese auf eine andere Telefonnummer umgeleitet wird;
- Zuweisen zu der umgeleiteten Telefonnummer eine CNAME-Aufzeichnung, zugeordnet zu dem DNS-Namen (der codierten Nummer) entsprechend der umgeleiteten Telefonnummer; und
- Durchführen eines DNS-Lösungsvorganges an dem CNAME.

33. Verfahren nach einem der Ansprüche 26 bis 32, **gekennzeichnet durch** die Schritte, Durchführen einer Anordnung, dass in der Benennungsstruktur für Nutzer mit einer PBX, die als eine Nummer der Telefonnummern dient, welche eine gemeinsame Vorwahl haben, dass diese Nutzer ihr eigenes Gateway betreiben, welches alle Verlängerungen unterhalb der Vorwahl bedient.

34. Verfahren nach einem der Ansprüche 26 bis 32, **gekennzeichnet durch** die Schritte:
- Durchführen der Anordnung, dass in der Benennungsstruktur für internationale Anrufe die Telefonnummern mit einer Ländercode-Vorwahl versehen sind; und
- Neustarten des DNS-Lösungsvorganges bei Beendigung des einheimischen Gateway-Wählvorganges für den Anruf, in dem Land, in welches der Anruf führt, mit einem Domain-Namen, der den Gateway-Service in diesem Land **durch** einen Service-Provider zugewiesen ist.

35. Verfahren nach Anspruch 34, **gekennzeichnet durch** den Schritt Vorsehen einer Liste von PG-Aufzeichnungen entsprechend den in diesem Land betriebenen Gateways **durch** den Service-Provider.

## Revendications

1. Système de passerelles pour un système de télécommunication Internet, dans lequel le dit système de passerelles est prévu pour connecter au moins un réseau téléphonique à l'Internet et faciliter ainsi une interconnexion du téléphone, sur l'Internet, et établir un pont entre des protocoles vocaux Internet et des protocoles vocaux du dit au moins un réseau téléphonique, et dans lequel le dit système comprend un module de localisation de passerelle prévu pour localiser celle d'une pluralité de passerelles qui convient le mieux pour un appel particulier, **caractérisé en ce que** le dit module de localisation de passerelle est prévu pour traduire un numéro composé pour un appel téléphonique en une liste de priorité des passerelles préférées pour cet appel, la distance dans le réseau de service téléphonique de base POTS parcourue par l'appel étant la base de l'établissement de priorité, et pour localiser celle du dit ensemble de passerelles préférées qui est disponible pour l'appel et qui a une priorité plus élevée que les autres passerelles disponibles, appelée ici la priorité la plus élevée.

2. Système de passerelles selon la revendication 1, **caractérisé en ce que** la passerelle ayant la priorité la plus élevée est utilisée pour l'appel, et **en ce que**, dans le cas où la dite passerelle ayant la priorité la plus élevée est indisponible, les autres passerelles de plus faible priorité sont essayées, successivement, conformément à leur liste de priorité, jusqu'à ce qu'une passerelle disponible soit localisée pour l'appel.

3. Système de passerelles selon une quelconque des revendications précédentes, **caractérisé en ce que** le dit module de localisation de passerelle est prévu pour dialoguer avec des utilisateurs d'Internet, par l'intermédiaire du World Wide Web (WWW), **en ce que** le dit module de localisation de passerelle comprend un système d'appellation de domaine (DNS) ayant, pour chaque appel téléphonique, un article de passerelle de téléphone (PG) pour chaque passerelle du dit ensemble de priorité des passerelles préférées, chacun des dits articles comprenant une valeur de priorité et un nom de domaine pour une passerelle respective.

4. Système de passerelles selon la revendication 3, **caractérisé en ce qu'**une structure d'appellation pour un service de passerelles Internet - réseau téléphonique comprend un nom de domaine pour le service de passerelles.

5. Système de passerelles selon la revendication 3 ou la revendication 4, **caractérisé en ce que** la dite valeur de priorité est une valeur de préférence de 16 chiffres dont les nombres inférieurs indiquent une préférence plus grande.

6. Système de passerelles selon une quelconque des revendications 3 à 5, **caractérisé en ce que** le dit nom de domaine identifie une passerelle qui peut desservir un numéro de téléphone, ou un préfixe de numéro de téléphone, codé comme un nom de domaine distinct.

7. Système de passerelles selon une quelconque des revendications précédentes, **caractérisé en ce que** le dit module de localisation de passerelle comprend une base de données répartie, pour traduire le dit numéro composé pour un appel téléphonique en une liste de priorité des passerelles préférées pour cet appel.

8. Système de passerelles selon la revendication 7, lorsqu'elle dépend d'une quelconque des revendications 4 à 7, **caractérisé en ce que** la dite base de données répartie est basée sur un Système d'Appellation de Domaine.

9. Système de passerelles selon une quelconque des revendications précédentes, **caractérisé en ce qu'**au moins une passerelle de la liste de priorité des passerelles préférées pour un appel prend en charge un ensemble de voix-sur-Internet (VON) utilisé ou choisi par une entité d'appel.

10. Système de passerelles selon la revendication 9, **caractérisé en ce que** le dit module de localisation de passerelle comprend un système d'appellation de domaine (DNS) ayant un article VINFO contenant des informations sur l'ensemble VON et le pseudonyme à utiliser pour les connexions de voix sur Internet à un serveur particulier, ou hôte, le dit article VINFO étant utilisé pour la sélection d'une passerelle pour un appel qui prend en charge un ensemble VON utilisé ou choisi par une entité d'appel.

11. Système de passerelles selon la revendication 10, **caractérisé en ce que** le dit article VINFO est une chaîne, telle que « IPHONE » ou « WEBPHONE », correspondant à l'ensemble VON.

12. Système de passerelles selon une quelconque des revendications 3 à 11, **caractérisé en ce que** l'article MX de DNS pour l'acheminement de courrier est utilisé pour transporter la sémantique de PG.

13. Système de passerelles selon une quelconque des revendications précédentes, **caractérisé en ce que** le dit module de localisation de passerelle est prévu pour prendre en charge une interconnexion téléphonique entre des fournisseurs de service géographiquement distincts.

14. Système de passerelles selon une quelconque des revendications précédentes, **caractérisé en ce que** le dit module de localisation de passerelle comprend:
un serveur de World Wide Web (WWW) ;
un Séparateur de Nom pour un Système d'Appellation de Domaine (DNS) ;
une Interface de Protocole de Commande de Transmission (TCP) / Protocole Internet (IP) pour le serveur WWW et le Séparateur de Nom ;
une Unité de Localisation de Passerelle, prévue pour coopérer avec le serveur WWW et le Séparateur de Nom ; et
un Système de Serveur, pour le DNS, prévu pour coopérer avec le Séparateur de Nom.

15. Système de télécommunication dans lequel un service de téléphonie et des services associés sont fournis en utilisant l'Internet comme moyen de transmission pour les dits services, dans lequel un système de passerelles est prévu pour connecter au moins un réseau téléphonique à l'Internet et faciliter ainsi une interconnexion téléphonique, sur l'Internet, et pour établir un pont entre des protocoles vocaux Internet et des protocoles vocaux du dit au moins un réseau téléphonique, et dans lequel un système de localisation de passerelle est prévu pour localiser celle d'une pluralité de passerelles qui convient le mieux pour un appel particulier, le dit système de télécommunication comprenant un système de passerelles selon une quelconque des revendications 1 à 14.

16. Procédé pour le traitement d'appels téléphoniques sur l'Internet dans un système de télécommunication dans lequel des services de téléphonie et associés sont fournis en utilisant l'Internet comme un moyen de transmission pour les dits services, dans lequel un système de passerelles est prévu pour connecter au moins un réseau téléphonique à l'Internet et faciliter ainsi une interconnexion de téléphonie, sur l'Internet, et pour établir un pont entre des protocoles vocaux Internet et des protocoles vocaux du dit au moins un réseau téléphonique, et dans lequel un système de localisation de passerelle est prévu pour localiser celle d'une pluralité de passerelles qui convient le mieux pour un appel particulier, le procédé étant
**caractérisé par** les étapes de :
traduction d'un numéro composé pour un appel téléphonique en une liste de priorité des passerelles préférées pour cet appel, dans laquelle la distance dans le réseau POTS parcourue par l'appel est la base d'établissement de la priorité, et
localisation de celle du dit ensemble de passerelles préférées qui est disponible pour l'appel et qui a une priorité plus élevée que les autres passerelles disponibles (appelée ici la priorité la plus élevée).

17. Procédé selon la revendication 16, **caractérisé par** les étapes de:
utilisation de la passerelle ayant la priorité la plus élevée pour l'appel ; et
dans le cas où la dite passerelle ayant la priorité la plus élevée est indisponible, essai des autres passerelles de plus faible priorité, successivement, conformément à leur liste de priorité, jusqu'à ce qu'une passerelle disponible soit localisée pour l'appel.

18. Procédé selon la revendication 16 ou la revendication 17, **caractérisé par** l'étape d'abandon de l'appel, dans le cas où aucune passerelle de la liste de priorité des passerelles préférées n'est disponible.

19. Procédé selon une quelconque des revendications 16 à 18, **caractérisé par** l'étape d'utilisation d'un Système d'Appellation de Domaine (DNS) pour fournir, pour chaque appel téléphonique, un article de Passerelle de Téléphone (PG) pour chacune du dit ensemble de priorité des passerelles préférées, chacun des dits articles comprenant une valeur de priorité et un nom de domaine pour une passerelle respective.

20. Procédé selon la revendication 19, **caractérisé en ce que** la dite valeur de priorité est une valeur de préférence de 16 chiffres, dans laquelle les nombres inférieurs indiquent une préférence supérieure.

21. Procédé selon la revendication 19 ou la revendication 20, **caractérisé en ce que** le dit nom de domaine identifie une passerelle qui peut desservir un numéro de téléphone, ou un préfixe de numéro de téléphone, codé comme un nom de domaine distinct.

22. Procédé selon une quelconque des revendications 16 à 21, **caractérisé par** l'étape d'utilisation d'une base de données répartie afin de traduire le numéro composé pour un appel téléphonique en une liste de priorité des passerelles préférées pour cet appel.

23. Procédé selon une quelconque des revendications 16 à 22, **caractérisé en ce qu'**au moins une passerelle de la liste de priorité des passerelles préférées pour un appel prend en charge un ensemble VON utilisé ou choisi par une entité d'appel.

24. Procédé selon la revendication 23, **caractérisé par** les étapes de :
utilisation d'un Système d'Appellation de Domaine (DNS) pour fournir un article VINFO contenant des informations sur l'ensemble VON et le Pseudonyme à utiliser pour les connexions de voix sur Internet à un serveur particulier, ou hôte, et
utilisation du dit article VINFO pour choisir une passerelle pour un appel, qui prend en charge un ensemble VON utilisé ou choisi par une entité d'appel.

25. Procédé selon la revendication 24, **caractérisé en ce que** le dit article VINFO est une chaîne, telle que « IPHONE » ou « WEBPHONE », correspondant à l'ensemble VON.

26. Procédé selon une quelconque des revendications 19 à 25, **caractérisé par** l'utilisation de l'article MX de DNS pour l'acheminement de courrier afin de transporter la sémantique de PG.

27. Procédé selon une quelconque des revendications 19 à 26, **caractérisé par** l'étape d'utilisation d'une structure d'appellation pour fournir les dits noms de domaine, la dite structure d'appellation incluant un nom de domaine pour un service de passerelle Internet - réseau téléphonique à fournir par un fournisseur de service.

28. Procédé selon la revendication 27, **caractérisé par** les étapes de :
construction d'un nom de domaine pour le dit service de passerelles, pour fournir un point de départ pour la structure d'appellation ;
construction d'un nom de domaine pour un numéro téléphonique composé, incluant le nom du service de passerelles;
tentative de résolution DNS d'une chaîne d'éléments formant le nom entier pour le numéro composé ;
dans le cas où le traitement de résolution échoue, séparation de l'élément le moins significatif de la chaîne et essai d'une nouvelle résolution DNS ;
poursuite de ce traitement jusqu'à ce que la résolution DNS réussisse ou que la chaîne soit réduite au nom du service de passerelles ; et
dans le cas où la chaîne est réduite au nom du service de passerelles, l'ensemble de la tentative d'appel est abandonné.

29. Procédé selon la revendication 28, **caractérisé par** les étapes de:
lors de l'achèvement réussi du traitement de résolution, transmission d'une liste d'articles de PG pour un ensemble de passerelles au système de localisation de passerelle ;et
enlèvement des passerelles qui ne prennent pas en charge un ensemble VON utilisé ou choisi par un utilisateur.

30. Procédé selon la revendication 29, **caractérisé par** les étapes de :
enlèvement des passerelles qui ne prennent pas en charge l'ensemble VON utilisé ou choisi par un utilisateur, par exécution, sur chacune des passerelles identifiées par les articles de PG, d'une recherche de DNS avec QueryType = VINFO, une chaîne VINFO étant comparée à l'ensemble VON préféré des utilisateurs ;
traduction des articles de PG acceptés en une syntaxe HTML ; et
transfert des articles de PG traduits à l'utilisateur, les dits articles de PG traduits représentant une liste classée par priorité des passerelles préférées pour un appel.

31. Procédé selon la revendication 30, **caractérisé par** les étapes de :
tentative de connexion du dit utilisateur, lors de l'exécution d'un appel téléphonique, à une passerelle ayant la priorité la plus élevée (la plus faible préférence) ;
dans le cas où la passerelle ayant la priorité la plus élevée est indisponible, essai de connexion à la passerelle ayant la deuxième valeur de préférence la plus basse ; et
répétition de ce traitement, en essayant les autres passerelles, de plus faible priorité, successivement, conformément à leur liste de priorité, jusqu'à ce qu'une passerelle disponible soit localisée pour l'appel.

32. Procédé selon une quelconque des revendications 16 à 31, **caractérisé par** les étapes de :
prise de dispositions pour rediriger un numéro de téléphone vers un autre numéro de téléphone ;
affectation, au dit numéro de téléphone redirigé, d'un article CNAME, associé au nom de DNS (numéro codé) correspondant au numéro de téléphone redirigé ; et
exécution d'un traitement de résolution de DNS sur le CNAME.

33. Procédé selon une quelconque des revendications 25 à 32, **caractérisé par** les étapes de prise de dispositions, dans la structure d'appellation, pour des utilisateurs ayant un PBX desservant un certain nombre de numéros de téléphone ayant un préfixe commun, les dits utilisateurs utilisant leur propre passerelle desservant toutes les extensions au-dessous du préfixe.

34. Procédé selon une quelconque des revendications 26 à 32, **caractérisé par** les étapes de:
prise de disposition, dans la structure d'appellation, pour des appels internationaux dont les numéros de téléphone comportent un préfixe avec un code de pays ; et
à la fin du traitement de sélection de passerelle indigène pour l'appel, redémarrage du traitement de séparation de DNS, dans le pays vers lequel l'appel est dirigé, avec un nom de domaine attribué au service de passerelles dans ce pays, par un fournisseur de service.

35. Procédé selon la revendication 34, **caractérisé par** l'étape de fourniture d'une liste d'articles de PG correspondant aux passerelles exploitées, dans le dit pays, par le fournisseur de service.
